# EUROPEAN PATENT APPLICATION

(11) **EP 1 677 047 A1**
(43) Date of publication of application: **05.07.2006**
(21) Application number: 04747589.2
(22) Date of filing: 15.07.2004
(51) Int. Cl.: F21V 8/00

(54) **SURFACE LIGHT SOURCE**

(30) Priority: 28.07.2003 JP 2003281211
(71) Applicant: AZ Electronic Materials (Japan) K.K., Tokyo 113-0021 (JP)
(72) Inventor: HARADA, Takamasa, c/o Clariant (Japan) K.K., 2-chome, Bunkyo-ku, Tokyo 11386 (JP); KITA, Fumio, c/o Clariant AZ(Deutschland) AG, 65203 Wiesbaden (DE)
(74) Representative: Isenbruck, Günter
(86) International application number: PCT/JP2004/010123
(87) International publication number: WO 2005/010432

(57) **Abstract**

A surface light source comprising a light emitting part (11) consisting of a single spot light source, and a light guide plate (12), wherein a reflection plane (13) is provided on the back side of the light guide plate and a prism pattern (15) is also provided. A directional light diffusion film (14) consisting of at least two light scattering/transmitting phases having different refractive indexes, where on phase having a larger refractive index includes a large number of regions having a columnar structure extending in the thickness direction of the film and the columnar structure is inclining against the normal direction of the film at an angle of 5-60°, is arranged in the light exist surface side of the light guide plate (12) such that the scattering direction of the directional light diffusion film becomes the direction of uneven luminance. Unevenness of luminance becomes inconspicuous especially when it is observed from an oblique direction and highly efficient brighter irradiation of light is ensured in the front direction of a screen.

## Description

### Technical Field

The invention relates to a surface light source device, in particular a surface light source device used as a backlight in an image display device such as a liquid crystal display device or the like.

### Background Technology

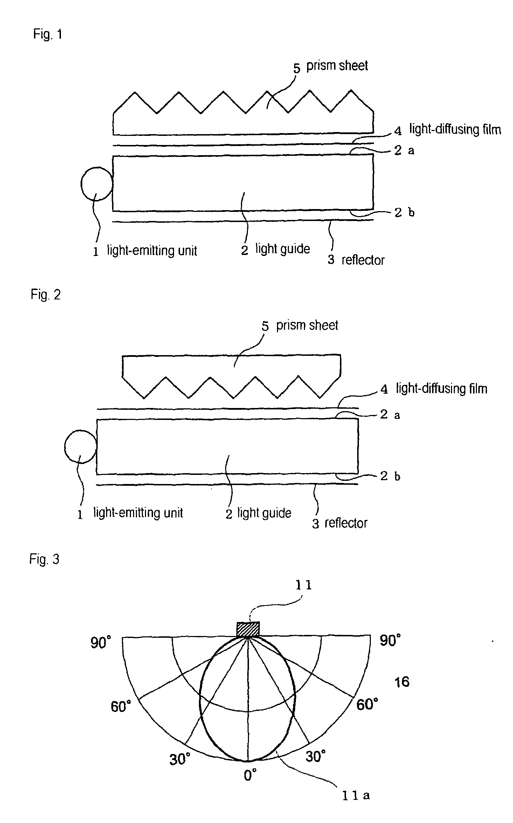

Surface light source devices are conventionally used in image display devices such as liquid crystal display devices to illuminate the display panel. These surface light source devices generally comprise a light-emitting unit, a light guide, a reflector, a prism sheet and the like. A conventional surface light source device will now be described with reference to the drawings. Fig. 1 and Fig. 2 are schematic cross-sections which illustrate an example of a conventional surface light source device, and comprise light-emitting unit 1, light guide 2, reflector 3, light-diffusing film 4, and prism sheet 5. In the surface light source device of Fig. 1, the light-emitting unit comprises a light-emitting diode (LED) which is a point light source, or a cold cathode fluorescent tube which is a line light source (see for example Japanese Patent No. 2001-143512]. In recent years point light sources such as light-emitting diodes have been employed as the light source for small and medium-sized liquid crystal display elements in mobile telephones and the like due to the requirement for smaller devices and lower power consumption, and devices which employ a plurality of light-emitting diodes to ensure that the light from a point light source does not become uneven are known to the art(for example Japanese Patent No 2001-281456]. With these types of device, light-emitting unit 1 is positioned facing an end surface (the surface on which light is incident) of light guide 2. Light guide 2 is formed from transparent resin with a large refractive index such as polycarbonate resin or a metacrylic resin. Where necessary the rear surface (lower surface) 2b of the light guide is provided with a diffusion pattern such as printed dots of diffuse reflectance ink or the like, or processed to form an uneven surface. Reflector 3 has a reflective surface comprising aluminium, silver or the like with a high reflective index, both ends of the reflector being made to adhere to the rear surface of the light guide using double-sided tape not shown in the diagram. A reflective surface of aluminium, silver or the like can be formed by direct vacuum deposition on reverse surface 2b of the light guide, and the reflector may be omitted. Prism sheet 5 is also arranged such that the prism patterns with their triangular section run parallel to one another, being disposed on light-output surface 2a of light guide 2, the prism patterns being positioned away from the light guide in the surface light source device of Fig. 1, and facing the light guide in the surface light source device of Fig. 2.

With these conventional surface light source devices, light output from light-emitting unit 1 is diffused upwards by the reflector or the diffusion pattern disposed below the light guide either after being reflected at upper surface 2a or rear surface 2b of the light guide, or without being reflected at all. The angles of the prism, the uneven angles of the diffusion pattern, the dot printing of the diffuse reflectance ink and the like are optically designed to ensure that brightness is increased in the surface direction and that the whole surface is uniformly illuminated with light condensed to an extremely narrow angle on the other surface by the condensing effect of the prisms on light reaching the prism sheet.

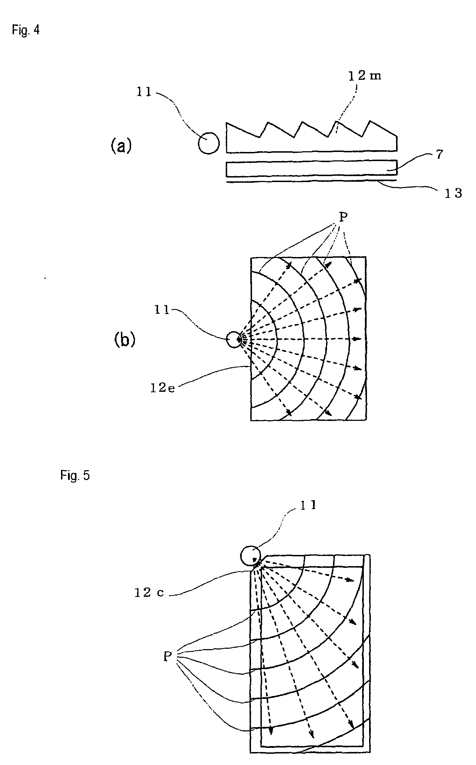

However although a light-emitting diode such as a chip-type LED or the like is employed as the point light source in conventional light-emitting units, this type of light-emitting diode has a directionality, as shown in Fig. 3, with light going directly downwards at an angle of 0º from the point light source, light-emitting diode 11, giving out the strongest light and reaching the furthest. The light generated at angles of 30º and 60º on both sides of the 0º angle is weak and does not reach far, so the range of uniform light is the elongated oval of pattern 11a. For this reason, when using a light-emitting diode with directionality such as a chip-type LED or the like as a light source, a light guide with microprisms 12m as shown in Fig. 4 (a) is employed to unify the quantity of light output from the surface light source device, pattern P of these microprisms forming concentric circles centred on point light source 11 as shown in Fig. 4 (b). By this means the axis of the light output from the point light source and pattern P of the microprism are at 90º to one another in every position, and are reflected by the microprisms with the same density both at the centre and edges of the light guide, improving both the brightness of the output light and the balance of the illumination compared to conventional devices. Instead of providing the rear surface with microprisms or a diffusion pattern formed of printed dots of diffuse reflectance ink or the like, or processing it to form an uneven surface, the same effect can be obtained by providing an optical film having microprisms or these diffusion patterns between the reflector and the light guide. A similar effect obtained by making the reflecting surface of the reflector into a diffusion pattern or an uneven surface similar to microprisms has been proposed in for example Japanese Patent No. 2003-100129. However even in this case, the difficulty remains that light output from the point light source, light-emitting diode 11, has the directionality shown in Fig. 3, and so although the light in the central part of the surface light source device is bright, the four corners are dark, the upper left and bottom left corners particularly so. To resolve this difficulty, it has been proposed to place point light source 11 in a corner (angle) 12c of the light guide, as shown in Fig.5, or to place the centre of the concentric circle pattern P at or in the vicinity of the corner of the light guide, as proposed for example in Japanese Patent No. 2001-143512.

Now, when using a surface light source device which employs this kind of point light source as the back light for a liquid crystal panel, the effective viewing angle for a screen on the liquid crystal display panel is normally around 30º (±15º). However, with the surface light source device shown in Fig. 1 or the surface light source device shown in Fig. 2, as the point light source has the directionality shown by the solid curve 11a in Fig. 3, the directionality of the light output from the prism pattern is liable to cause radial patterns of unevenness in the light, unevenness in the brightness being particularly visible from an oblique direction. This is especially noticeable where a single point light source is employed rather than a plurality of point light sources. As a result, the problem of visible unevenness in brightness can be resolved to a certain extent by increasing the number of point light sources. However, increasing the number of point light sources raises the issue of increased cost and power consumption. It is thus desirable to have a surface light source device in which a single point light source does not cause this kind of unevenness when viewed from an oblique direction. The same thing is true for surface light source devices with concentric circle prism patterns provided on the light guide or reflector as shown in Fig. 4 and Fig. 5.

Thus the purpose of invention is to provide a surface light source device which, as a surface light source device employing a single point light source as the source of light, is capable of outputting light efficiently with little visible unevenness in brightness, particularly with little visible unevenness in brightness when the display screen is viewed from an oblique direction, and moreover which is bright when the screen is observed from front on.

### Disclosure of the Invention

Having made a detailed study of the difficulty, the inventors have found that it can be resolved by positioning a light-diffusing film with directionality beside the light-outputting surface of said light guide. Directionality here means that the degree of diffusion differs with the direction, and unevenness in brightness can be prevented by causing the direction of diffusion of the light-diffusing sheet to appropriately correspond with the direction in which unevenness in brightness occurs.

In other words, the invention relates to the surface light source device cited in (1) - (7) below:
(1) In a surface light source device having a light-emitting unit comprising a point light source and a light guide, a reflecting surface being provided on the reverse side of the light guide and also having a prism pattern, a surface light source characterised in that a directional light-diffusing film which diffuses and allows light to pass, comprising two phases with differing refractive indices, and which in addition to the phase with the greater refractive index including a plurality of regions with a columnar structure extending in the direction of the thickness of the film, has said columnar structure inclined at an angle of more than 5º and less than 60º to the normal direction of the film, is provided beside the light-outputting surface of the light guide in such a way that the direction of diffusion of the directional light-diffusing film is in the same direction as the direction of the unevenness in brightness.

(2) The surface light source device claimed in Claim (1), characterised in that said directional light-diffusing film is made to adhere to said light guide or prism sheet with prism pattern using a light-diffusing adhesion agent containing microparticles with a diameter of 0.1 - 50 µm.

(3) The surface light source device claimed in Claim (2), characterised in that said light-diffusing adhesion agent contains minute particles with diameters in the range of 1-100 nm whose refractive index is 1.8 or greater.

(4) The surface optical source device claimed in Claims (2) and (3), characterized in that the refractive index of said light-diffusing adhesion agent is 1.55 or greater.

(5) The surface optical source device claimed in any of Claims (1) - (4), characterized in that said columnar structure has a structure such that the refractive index varies gradually along the axis line of said columnar structure.

(6) The surface light source device claimed in any of Claims (1) - (5), characterized in that said light-emitting unit is positioned facing the centre of the end surface of the light guide, the direction of diffusion of said directional light-diffusing film being parallel to the other end.

(7) The surface light source device claimed in any of Claims (1) - (6), characterized in that said light-emitting unit is positioned facing the angled end surface of the light guide, the direction of diffusion of said directional light-diffusing film being directed towards the angle facing the light-emitting unit.

### Brief Description of the Drawings

(Fig. 1) Schematic cross-section of an example of a conventional surface light source device.
(Fig. 2) Schematic cross-section of another example of a conventional surface light source device.
(Fig. 3) Diagram illustrating the irradiation intensity of a point light source.
(Fig. 4) Schematic cross-section and plan view of a conventional example of a surface light source device with the point light source positioned at the centre of the end surface of the light guide on which light is incident.
(Fig. 5) Illustrates the structure of a conventional surface light source device in which a point light source is positioned at the angled end surface of the light guide on which light is incident.

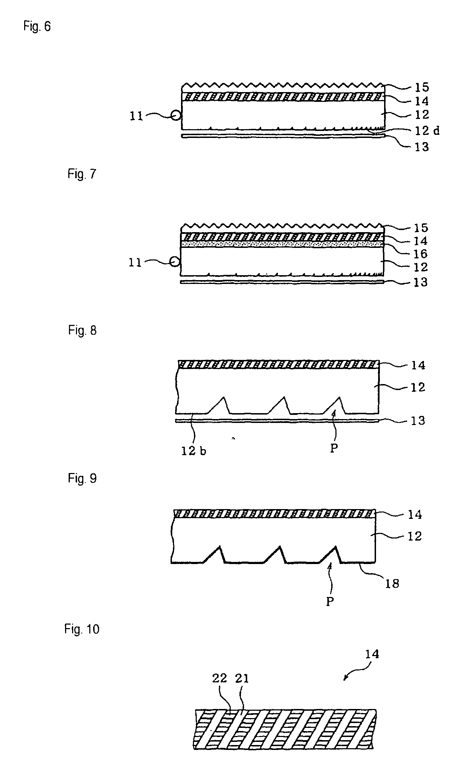

(Fig. 6) Schematic cross-section of an example of a surface light source device of the invention.
(Fig. 7) Schematic cross-section of another example of a surface light source device of the invention.
(Fig. 8) Partial schematic cross-section of a still further example of a surface light source device of the invention.
(Fig. 9) Partial schematic cross-section of a still further example of a surface light source device of the invention.
(Fig. 10) Partial schematic cross-section of the directional light-diffusing film used in the invention.

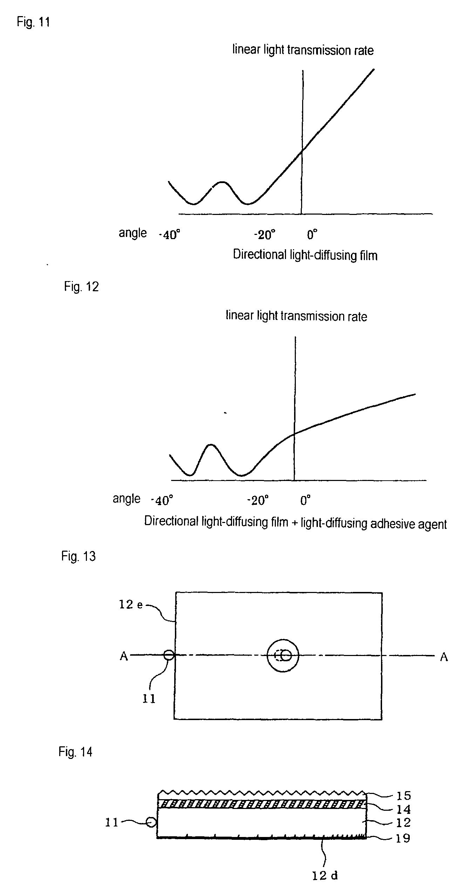

(Fig. 11) Diagram illustrating the light transmission characteristics along the optical axis in which dispersion occurs in the directional light-diffusing film.
(Fig. 12) Diagram illustrating the light transmission characteristics along the optical axis in which dispersion occurs in a directional light-diffusing film where the light-diffusing film combines a directional light-diffusing film and a light-diffusing adhesive agent layer.
(Fig. 13) Schematic plan view of the surface light source device of Embodiment 1 in which the light source is positioned at the centre of the light guide.
(Fig. 14) Schematic cross-section of the surface light source device of Embodiment 2.

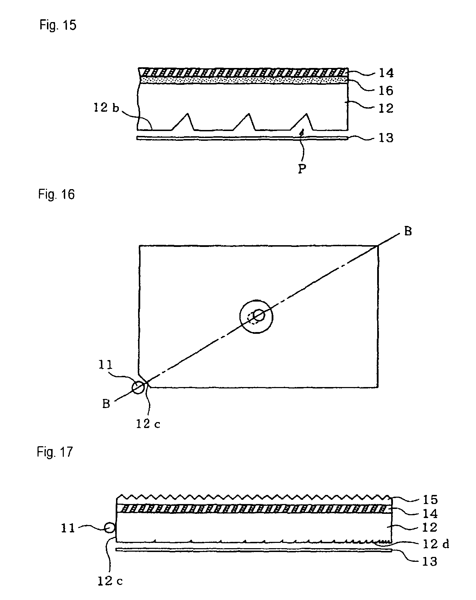

(Fig. 15) Partial schematic cross-section of the surface light source device of Embodiment 6.
(Fig. 16) Schematic plan view of the surface light source device of Embodiment 7.
(Fig. 17) Cross-section through the line B-B in Fig. 16.

### Detailed Description

The invention will now be described in further detail with reference to the drawings. Fig. 6 is a schematic cross-section illustrating an embodiment of the surface light source device (backlight) of the invention, the surface light source device in Fig. 6 having light-emitting unit 11 comprising a point light source, light guide 12, reflector 13 with a reflecting surface provided on the rear surface of the light guide, and prism sheet 15 having directional light-diffusing film 14 and a prism pattern, and disposed such that the dispersion direction of said directional light-diffusing film is in the same direction as that of the direction of the unevenness in brightness. A schematic cross-section illustrating another embodiment of the surface light source device of the invention is shown in Fig. 7. In Fig. 7, directional light-diffusing film 14 of the surface light source device in Fig. 6 is bonded to light guide 12 by means of light-diffusing adhesive agent layer 16. A partial schematic cross-section of a still further embodiment of the surface light source device of the invention is shown in Fig. 8 and Fig. 9. In Fig. 8 and Fig. 9, prism pattern P is provided on lower surface 12b of light guide 12. Where prism pattern P is provided on lower surface 12b of the light guide, prism sheet 15 may be omitted. Furthermore, as shown in Fig. 9, reflective layer 18 of vacuum-deposited metal or the like is provided on the rear surface (lower surface) of the light guide, and may be used as the reflective surface. It should be noted that descriptions of items identical to those shown in Fig. 6 have been omitted in Figs. 7-9. A more specific description of the light-emitting unit, light guide, reflector, directional light-diffusing film, prism sheet and the like will now be given for the surface light source device of the invention.

First of all, the light-emitting unit in an image display device such as a liquid crystal display device or the like may be of any kind as long as it is point light source 11 of the type used as the light source for a conventional backlight. A light-emitting diode (LED) is used which may comprise a variety of materials such as GaP, GaAlAs, and InGaAlP and their variants. In the invention, the light-emitting unit is a point light source comprising a single LED lamp. As shown in Fig. 4 and Fig. 5, point light source 11 is normally positioned at the centre or on an angle 12c of end surface 12e on which light is incident on the light guide, and facing the surface of light guide 12 on which light is incident.

Light guide 12 is a plate-shaped member comprising transparent material with a large refractive index. Any materials used as the material for a conventional light guide will be suitable as materials for the structure of the light guide, but polycarbonate resin and metacrylic resin are particularly preferable from the point of view of their transparency and refractive index. The configuration of the light guide may also be similar to that of conventional ones, and the rear surface (lower surface) 12b of the light guide may also be provided where necessary with an uneven configuration or printed diffusion pattern 12d. Furthermore, as shown in Fig. 8, prism pattern P is provided on the lower surface of light guide 12, by which means the light conveyed within the light guide is reflected, and it may be arranged to be output from the output surface of the surface light source device. The prism pattern may also be formed on the upper surface of the light guide.

Any type of reflector may be used providing that it is of a light-reflecting type. Preferred types of reflector include a metal sheet such as aluminium foil or the like, a metal plate or sheet of synthetic resin or the like, or a sheet with vacuum-deposited metal on which a light-reflecting surface of silver, aluminium or the like can be formed on the plate or sheet, but are not limited to these, and any type of reflector used as a reflector in a conventional surface light source device may be used. Where necessary a white diffusion plate may also be used as a reflector. Furthermore, as shown in Fig. 9, there is no need for a reflector where a reflective film has been formed with a white diffusion plate, reflector layer 18 comprising a layer of metal vacuum-deposited on the rear surface of the light plate, or the like.

Fig. 10 shows a partial schematic cross-section of directional light-diffusive film 14 which, as used in the surface light source device of the invention, represents a major characteristic of the invention. Directional light-diffusing film 14 is a light-diffusing film which diffuses and allows light to pass, comprising two phases 21, 22 with differing refractive indices, the phase with the greater refractive index including a plurality of regions 22 with a columnar structure extending at an angle to the direction of the thickness of the film. Directional light-diffusing film 14 is positioned on top of said light guide 12. Where prism sheet 15 is used in the surface light source device of the invention, directional light-diffusing film 14 may be positioned between prism sheet 15 and light guide 12, and may also be positioned on prism sheet 15.

The light-diffusing phenomena occurring in this directional light-diffusing film will now be explained with reference to Figs. 10 and 11. Fig. 10 is a cross-section through the light-diffusing axis of the directional light-diffusing film. Fig. 11 is a diagram showing the linear light transmission rate for light in which the angle to the light-diffusing axis of the directional light-diffusing film shown in Fig. 10 is changed. In Fig. 10, columnar structures 22 which are regions of a higher refractive index are formed as cylindrical shapes. With this directional light-diffusing film 14, cylindrical regions 22 with a high refractive index and a diameter close to the wavelength of the light are formed in polymer film 21 at an angle to the surface of the film. These cylindrical regions 22 with a high refractive index function as columnar lenses by being formed so that the refractive index gradually varies at the interface between cylindrical regions 22 of high refractive index and regions 21 of low refractive index for example. With directional light-diffusing film 14 shown in Fig. 10, as the light becomes incident at an increasingly oblique angle to the axis of the columns, with the incident angle to film 14 increasing to the left-hand side of the diagram (increasing in the positive direction in Fig. 11) diffusion of the light decreases and the transmission rate increases. On the other hand as the angle of incidence of the light approaches the axis of the column, (increasing in the negative direction in Fig. 11) diffusion increases, and the rate transmission rate decreases. As the angle of incidence of the light approaches the axis line of the column still closer, the transmission rate recovers, and as the angle of incidence goes past the axis of the column, the transmission rate recovers with renewed diffusion after decreasing. In Fig. 11, diffusion in the directional light-diffusing film has a maximum of between -40º and -20º for diffusion in one direction, and the maximum angle of diffusion for this directional light-diffusing film can be appropriately controlled using such factors as the refractive index of the directional light-diffusing film, the diameter of the columnar structure, the thickness of the film, and the oblique angle of the columnar structure. In the surface light source device of the invention, the oblique angle of the axis of the columnar structure is normally between 5º-60º with respect to the direction of thickness of the film, preferably between 10º-50º, and still more preferably between 20º-40º.

As described above, with the directional light-diffusing film shown in Fig. 10 and Fig. 11, while light incident at angles of between 0º-60º to the surface of the film is transmitted with virtually no diffusion, light is diffused at angles of -40º to -20º. This is an very special optical characteristic, and by employing this characteristic it is possible to eliminate unevenness in brightness in a surface light source device using a point light source. In other words, it is possible to eliminate unevenness in the light visible when observing at an oblique angle by diffusing the light output in the oblique direction where unevenness in the light from a point light source is visible when viewing an image display device obliquely, by ensuring that the diffusion angle of the directional light-diffusing film broadly matches the oblique observation angle where unevenness in the light is likely to occur.

It should be noted that it is possible to define the AOV (Angle of View) as a parameter for light diffusion. The smaller the AOV, the less the diffusion characteristics, and light is seen to be transmitted. When a laser light is directed at the film experimentally, light intensity can be measured through 180º by rotating the light-emitting unit. The AOV is defined as the angle of the half width of the profile of the light intensity. The AOV of the light-diffusing film shown in Fig. 10 and Fig. 11 is less than 5º in the vertical direction, and it shows a linear light transmission rate of greater than 10%, with very little diffusion. The AOV in the 0º direction and linear light transmission rate can be easily varied with the difference in the refractive index between regions of high refractive index in the directional light-diffusing film and the lower refractive index of the polymer film, the density and the diameter of the columnar structures. Furthermore, the maximum diffusion angle can also be controlled as desired with the difference in the refractive index between regions of high refractive index in the directional light-diffusing film and the lower refractive index of the polymer film, the diameter of the columnar structures, the thickness of the film and the obliquity of the angle to the axis of the columnar structures.

There is no limitation on the size of the columnar structures in the light-diffusing film, but it is preferable that the range of the diameter be between 10 nm and 100 µm. There is no limitation on the thickness of the film either, but it is generally in the range of approximately 2-100 µm. Moreover, the shape of the columnar structure is not limited to a cylindrical shape, but may of oval or other configuration, and there is no limitation on the size of these shapes. In addition, each of the columnar structures may be positioned regularly or irregularly.

There is no particular limitation on the method of forming the columnar structure for the light-diffusing film, which may be selected from any of the existing conventional methods, but the preferred method is a method which selectively irradiates a radiation-sensitive polymer film to form columnar structures with a high refractive index. Prior to radiation the polymer film and may be a pre-polymer or a monomer, and it may be polymerized where necessary after the radiation using a method such as heating. At this time the preferred method is a method whereby the radiation-sensitive polymer film is irradiated with the radiation at a set angle via a mask with the desired pattern formed on it, and using this method it is possible to form a columnar structure with a gradually varying refractive index at the interface between the columnar structure and the base film. The method of forming the mask may be any method conventionally used. As another method of forming the columnar structure, the radiation beam may be irradiated onto the radiation-sensitive polymer film at a set angle with only the required parts exposed, thus polymerizing the radiation-sensitive polymer film directly without using a mask. There is also a method whereby apertures are formed in the polymer film using a laser beam or another method, with material of a high refractive index being filled into the apertures thereafter. There is no particular limitation on the material for the radiation-sensitive polymer film, but it may for example be a type that employs commercially available material such as DuPont's OMNIDEX (registered trademark) sold as HRF 150 and HRF 600.

The refractive index of lower refractive index region 21 which comprises the base material of the polymer film and the refractive index of the high refractive index region 22 are not limited by the invention, and may be selected as appropriate to the light-diffusing characteristics required, but are preferably in the range of 1.2-1.8, and more preferably in the range 1.35-1.8. Material with a double refractive index is undesirable due to the coloration effect, but material which exhibits double refraction may be used where the double refractive index falls within an acceptable range. It is preferable that the actual material for the base polymer film and high refractive index regions have a high rate of light transmission. The difference between the refractive index of the base material of the polymer film and the high refractive index regions is generally set to be within the range of 0.005-0.2. With a reflective index of less than 0.05, it is not easy to achieve adequate diffusion characteristics. More preferably, it is in the range of 0.005-0.1. The refractive indices of the polymer film base and high refractive index regions may be a so-called step index type which rapidly changes at the interface between the two phases, but the so-called graded index type which form columnar structures having refractive indices that gradually vary is preferable due to the desirable diffusion characteristics.

The three main characteristics of said light-diffusing film can be summarised as follows:
(1) the directional light-diffusing film comprises at least two phases having different refractive indices, diffuses and transmits the light, and has lens-like columnar structures preferably with a refractive index which gradually varies.
(2) the phase with the larger refractive index in said directional diffusing film is a columnar structure angled at 5-60º to the direction of thickness of the film, and is an optical film cited in (1) with a transmission rate of more than 10% in the normal direction of said film.
(3) the axes of the columnar structures angled at 5-60º to the direction of thickness of said film run parallel to one another.
   Item (2) is a particularly necessary characteristic to ensure light is output in a vertical direction without impeding the condensing of the light collected by the light guide and prism sheet.

The light-diffusing adhesive agent used in the invention containing microparticles with diameters of 0.1-50 µm will now be described. In the invention, the light-diffusing adhesive agent causes the light-diffusing film and the light guide to adhere together, and is used as it forms light-diffusing adhesive layer 16 in which light is diffused uniformly between the light-diffusing film and the light guide. This kind of light-diffusing adhesive agent can be manufactured using conventional methods known to the art, and is generally manufactured by including a filler within the base resin of the adhesive agent.

Examples of the base resin of the light-diffusing adhesive agent include polyester resins, epoxy resins, polyurethane resins, silicon resins, acrylic resins and the like. These may be used singly or in compounds of two or more. Acrylic resins in particular are superior for their reliable resistance to water, heat and light, have good adhesive power and transparency, being preferable as it is easy to adjust their refractive index to suit the liquid crystal display. Examples of acrylic adhesive agents include acrylic acid and its esters, metacrylic acid and its esters, acrylamide, homopolymers of acryl monomers such as acrylonitrile or copolymers of these, and further copolymers of at least one of said acryl monomers and aromatic vinyl monomers such as vinyl acetate, anhydrous maleic acid and styrene. In particular, with main monomers such as ethylene acrylate, butyl acrylate, 2-ethylhexyl acrylate which express adhesive properties, monomers such as vinyl acetate, acyrlonitrile, acrylamide, styrene, metacrylate, and methyl acrylate which act as cohesive components, copolymers comprising functional monomers such as metacrylic acid, acrylic acid, itaconic acid, hydroxy ethyl acrylate, hydroxy propyl metacrylate, dimethyl amino ethyl metacrylate, acrylamide, methylol acrylamide, glycidyl metacrylate, anhydrous maleic acid which further improve adhesion and provide a starting point for bridging, Tg (the glass transition point) is between -60ºC and -15ºC, compounds with a weighted average molecular weight of between 200,000 and 1,000,000 being preferable.

At the same time, as a hardening agent for the light-diffusing adhesive agent, bridging compounds such as metal chelates, isocyanates and epoxies can be used singly or in compounds of two or more as necessary. When containing a filler to be described later, this kind of acrylic adhesive agent will preferably be mixed so as to have an adhesive force in the range of 100-2000 g/25mm. With an adhesive force of less than 100 /25mm resistance to the environment is impaired, and in particular there is the danger that separation will occur at high temperatures and humidities, yet when greater than 2000 g/25 mm there is the disadvantage that the film cannot be removed and reaffixed, or where it can that the adhesive agent will remain behind. The refractive index of acrylic adhesive agents should preferably be in the range of 1.45-1.70, and in particular in the range of 1.5-1.65.

General examples of the filler which included in the structure of the light-diffusing adhesive agent to diffuse light include white inorganic pigments such as silica, calcium carbonate, aluminium hydrocarbonate, magnesium hydrocarbonate, clay, talc, and titanium dioxide, and transparent or white organic pigments such as acrylic resin, polystyrene resin, epoxy resin, and silicon resin. When selecting an acrylic adhesive agent, silicon beads, epoxy resin beads are preferred as they exhibit superior dispersal with respect to the acrylic adhesive agent, and a uniform and high quality light diffusion can be obtained. The shape of the filler should preferably be round, which permits a uniform diffusion of light.

The diameters of the microparticles of this filler should be in the range of 0.1-50 µm, and preferably between 0.1-20 µm, and more preferably in the range of 0.5 to 10 µm. The range of 0.1-10 µm is particularly preferred. If the diameter of the microparticles is less than 0.1 µm the filler does not have the desired effect, the diffusion of the light suffers and the background of the image is liable to become tinged with an aluminium colour. At the same time it is necessary to disperse the light as finely as possible to ensure paper-white quality, and if the diameter of the microparticles exceeds 50 µm, the particles are too coarse and the background of the image acquires a satin finish, reducing the paper-white effect and causing the contrast of the image to deteriorate.

The difference between the refractive index of the filler in the invention and the refractive index of the adhesive agent needs to be between 0.05 - 0.5, and preferably within the range of 0.05 - 0.3. If the difference in the refractive index is less than 0.05, light is not diffused, and a satisfactory paper-white effect cannot be obtained. Moreover, if the difference in the refractive index exceeds 0.5, the internal diffusion is too large, the overall light transmission rate deteriorates and the paper-white effect cannot be obtained. Furthermore, it is preferable that the refractive index of the filler be lower than the refractive index of the adhesive agent because it is easier to adjust, and improves productivity.

The quantity of filler to be included in the base resin of the adhesive agent will preferably be in the range of 1-40% by weight, and particularly between 2-20% by weight. If there is less than 1% of filler by weight, it is difficult for the filler to achieve the effect of diffusing the light and light-diffusing deteriorates, making it difficult to achieve improved screen brightness and visibility over a wide viewing angle, the effect of the invention. At the same time if the amount of filler included exceeds 40% by weight, the adhesion of the light-diffusing layer is decreased and it is liable to peel off, with the danger that durability will be reduced and it will not performed its function as a light-diffusing layer.

The optimal filler for inclusion in the light-diffusing film is plastic beads, ones with good transparency and a refractive index whose difference from that of the matrix resin is within the above-mentioned range being preferable. Preferred types of such plastic include melamine beads (refractive index; 1.57), acrylic beads (refractive index; 1.49), acrylstyrene beads (refractive index; 1.54) polycarbonate beads, polyethylene beads, and vinyl chloride beads. Inorganic fillers such as celium oxide (CeO₂; refractive index 1.63) may also be used. In the case of celium oxide, microparticles with a diameter of around 5 nm can be obtained, but as explained above those with a diameter in the range of 0.1 µm - 50 µm are the optimal choice.

In a comparison of the refractive indices of filler, where the refractive index of the resin used is low, microparticles with a high refractive index such as inorganic microparticles of TiO₂ (refractive index; 2.3-2.7), Y₂O₃ (refractive index; 1.87), La₂O₃ (refractive index; 1.95), ZrO₂ (refractive index; 2.05) with a particle diameter of 1-100 nm and preferably within the range of a few nm to several dozen nm are added to the light-diffusing adhesive agent to the extent required to maintain the diffusion properties of the film, and can be used to adjust the refractive index upwards. The greater the refractive index of the microparticles the better, being normally 1.8 or greater, and preferably 1.9 or greater and more preferably 2.0 or greater. It is undesirable to have the diameter of the microparticles greater than 100 nm, as this interferes with transparency. And although no limit is particularly specified, diameters of around 1 nm or more are preferable, for example 5 nm or more is preferred from the point of view of availability and ease of dispersal. By adding inorganic microparticles with a high refractive index as described to a light-diffusing adhesive agent with a low refractive index, and raising the refractive index of the base material of the adhesive agent, it is possible to form a light-diffusing adhesive agent with a refractive index greater than the refractive index of the light guide of between 1.45-1.7, and using this light-diffusing adhesive agent with its high refractive index to bond the directional light-diffusing film and the light guide, the critical angle at the interface between the light guide and the light-diffusing adhesive agent is eliminated, and total reflection is prevented. Thus light which escapes laterally due to total reflection under normal circumstances can be efficiently extracted from the light guide, allowing the light to be effectively used.

It should be noted that Fig. 12 shows the linear light transmission rate along the light axis in which diffusion takes place in a directional light-diffusing film for a light-diffusing film with the directional light-diffusing film combined with the light-diffusing adhesive agent. In the example in this Fig. 12, the transmission rate in the vertical direction is high, with the diffusion peak being reached tens of degrees away from the vertical, with light diffusion in the vertical direction being small, allowing the light the light guide is designed to deliver to be incident on the liquid crystal display panel side, with oblique diffusion. The particular difficulty to be resolved by the invention in the surface light source device is uneven brightness in the oblique direction, and it is possible to effectively eliminate the uneven brightness by the oblique diffusion of said light-diffusing film. In addition to this characteristic, it is possible to easily prevent deterioration in the light transmission rate due to light present in the gap between the light guide and the light-diffusing film or between the light-diffusing film and the prism sheet by bonding the light-diffusing film and the light guide or the prism sheet using the light-diffusing adhesive agent, and it is preferable to bond the directional light-diffusing film and light guide or prism sheets together using the light-diffusing adhesion agent from the point of view of improving contrast and visibility in the liquid crystal display device as well.

Furthermore, where the surface light source device of the invention is positioned as a backlight behind the liquid crystal display panel, the surface light source device will be positioned below the lower polarising plate of the liquid crystal display panel, with the result that optical films such as the directional light-diffusing film and prism sheets are positioned far away from the liquid crystal display panel. Thus even if faults should be present in an optical film such as the directional light-diffusing film and prism sheet, not only will the faults be difficult to observe, but because a directional light-diffusing film device which does not have a regularly repeating optical structure is easily obtained it is unlikely that Moire fringes will be generated between the liquid crystal display panel and the optical sheet when such a device is employed.

### Optimal Configurations for Embodying the Invention

The invention will now described with specific reference to embodiments, although the invention is not limited to the following embodiments.

### Embodiment 1

The surface light source device of the first embodiment of the invention will now be described with reference to Fig. 6 and Fig. 13. Fig. 13 is a schematic plan view of the surface light source device of the first embodiment, and shows a partly exploded plan view of the directional light-diffusing film where it is assumed that there is no prism sheet in the central circle. Fig. 6 corresponds to a cross-section through the line A-A in Fig. 13. The surface light source device of the first embodiment, as shown in Fig. 6, comprises point light source 11 which comprises a light-emitting unit, light guide 12, reflector 13, directional light-diffusing film 14, and prism sheet 15. Point light source 11 comprises a single chip-type LED, and this chip-type LED is positioned facing the central part of the end surface (end surface to which light is incident) 12e of light guide 12, as shown in Fig. 13. Light guide 12 is formed of polycarbonate resin or polymetacrylic resin, and a plurality of concentric circular diffusion patterns centred on the light-emitting unit are formed on the lower surface of the light guide. The diffusion patterns are formed as depression 12d with a cross-section that is triangular or roughly semi-circular (half-oval) in shape, each diffusion pattern extending in a direction which intersects the direction connecting the light emitting unit and the position in which said diffusion pattern is placed. It should be noted that even if a prism sheet with prism patterns is positioned on the upper part of the reflector disposed on the upper side of light guide, the same characteristics will be expressed. On the lower surface of the light guide is provided reflector 13 comprising an aluminium sheet. Furthermore, the directional light-diffusing film is positioned so that the angle of columnar structures 22 of the directional light-diffusing film lies along the line A-A, (parallel to the other end) as shown in Fig. 13, in other words the direction of diffusion of the directional light-diffusing film is arranged to be in the same direction as that of the uneven brightness.

The directional light-diffusing film used in embodiment 1 was manufactured in the following fashion. In other words, a polyethylene terephthalate film was coated with 50 µm of light sensitive polymer using DuPont's OMNIDEX that HRF600 or 150, a mask having a plurality of round perforation patterns being made to adhere closely to the surface of this light-sensitive polymer using the hard contact method. However, the round perforations in the mask were within the range of 500 nm to 30 µm, with the average diameter being 2 µm. Ultraviolet light from a mercury lamp was condensed to a parallel beam using a lens system, and irradiated onto the mask at an angle of 30º to the normal direction. The length of the irradiation varies from several seconds to several minutes. Thereafter it was subject to thermal processing for one hour at 120ºC. As a result, a light-diffusing film having a regions of high refractive index with a columnar structure angled at 30º to the normal direction of the film was obtained with a cross-sectional structure matching the perforated pattern of the mask. The refractive index of the polymer matrix of the light-diffusing film was 1.47, and the refractive index of the regions with a high refractive index 1.52. The diffusion characteristics of the directional light-diffusing film thus obtained were as shown in Fig. 11. The AOV in the vertical direction was less than 5°, the linear light transmission rate greater than 10%, and there was very little diffusion.

When a single LED light is positioned as the light source at the centre of the light guide as in the first embodiment, there is a large quantity of light in the direction of the line A-A , as shown in Fig. 3, and for this reason it is known that with the conventional surface light source device of Fig. 1, an unevenness in brightness is generated in the centre of the surface light source device shaped like an elongated oval. However, with the surface light source device of Embodiment 1, as the direction of the diffusion of the light-diffusing film is positioned in the same direction as that of the unevenness in brightness, it is possible to ensure elimination of the unevenness in brightness conventionally visible. Thus when this surface light source device was used to light a liquid crystal panel as a back light, there was no unevenness in brightness even when seen from an angle, and a high degree of brightness seen from the front, resulting in a bright image display device.

Incidentally, with the surface light source device of Embodiment 1 it was possible to efficiently eliminate unevenness in brightness with a light-diffusing film having a maximum diffusion of between 10-30º, and when using a directional light-diffusing film where the slope of the columnar structures is in the range of 5-60º, it was possible to eliminate unevenness in brightness in every case.

### Embodiment 2

A second embodiment of the invention is shown in Fig. 14. In the surface light device of the first embodiment, the reflector was provided separately to the light guide, but with the surface light source device of this Embodiment 2, a reflecting surface comprising vacuum-deposited aluminium film 19 was formed on the surface formed on diffusion pattern 12d on the lower surface of light guide 12, the remainder of the structure being identical to that of Embodiment 1 apart from the fact that the reflector was not used. By forming a reflecting surface directly on the lower surface of the light guide, it was possible to ensure reflection of the light more reliably than the device of Embodiment 1 which reflects light using total reflection, and it was thus possible to improve the efficiency of light use.

### Embodiment 3

The surface light source device of embodiment 3 has an identical structure to that of Embodiment 1 apart from the fact that directional light-diffusing film 14 of the surface light source device of embodiment 1 is positioned on prism sheet 15 instead of being positioned on light guide 12. When this surface light source device was used to light a liquid crystal panel as a back light, there was no unevenness in brightness even when seen from an angle, and the degree of brightness seen from the front was high, resulting in a bright image display device.

### Embodiment 4

The surface light source device of Embodiment 4 is shown in Fig. 7, and was obtained in the same way as Embodiment 1 apart from the fact that light-diffusing film 15 was bonded to light guide 12 using light-diffusing adhesive agent 16. Here said light-diffusing adhesive agent was prepared in the following manner. In other words filler was added to a base coating with 1.5 parts of isocyanate hardener (D-90; manufactured by Soken Kagaku) for 100 parts of acrylic adhesive agent with a refractive index of 1.50, and mixed in an agitator for one hour. This light-diffusing adhesive was coated onto a 8µm parting sheet (PET3801, made by Rintech) to reach a thickness of 25 µm after drying, and with the forming of a diffusing adhesive layer after drying, a parting sheet (K-14, manufactured by Teijin) was bonded onto the diffusing adhesive layer to obtain a diffusing adhesive sheet. The filler used was silicon epoxy beads (refractive index 1.43, average particle diameter 1.0 µm) with an inclusive volume of 3%. The HAZE value of the light-diffusing adhesive agent thus obtained was 25. This light-diffusing adhesive agent was made to adhere to said light-diffusing film 14, and bonded to light guide 12 by pressure adhesion using a roller to obtain the surface light source device. When this surface light source device was used to light a liquid crystal panel as a back light, there was no unevenness in brightness even when seen from an angle, and the degree of brightness seen from the front was high, resulting in a bright image display device.

In the above embodiment, a light-diffusing adhesive agent with a HAZE value of 15 was obtained using a 2% inclusive volume of silicon resin beads, and used to form a surface light source device in the same way as above, and when this surface light source device was used to light a liquid crystal panel as a back light, there was no unevenness in brightness even when seen from an angle, and the degree brightness seen from the front was high, resulting in a bright image display device in the same way as for the surface light source device of Embodiment 4.

### Embodiment 5

The surface light source device of Embodiment 5 was manufactured in the same way as that of Embodiment 4 apart from the fact that the following was used as the light-diffusing adhesive agent. In other words filler was added to a base coating with 1.5 parts of isocyanate hardener (D-90; manufactured by Soken Kagaku) for 100 parts of acrylic adhesive agent with a refractive index of 1.50, and a dispersal liquid of TiO₂ or ZrO₂ butanol or MEK (methyl ethyl ketone) with a particle diameter size of several nm further added, and then mixed in an agitator for one hour, producing a light-diffusing adhesive agent. This light-diffusing adhesive agent was coated onto a 8µm thick parting sheet 2 (PET3801, made by Rintech) to reach a thickness of 25 µm after drying, and with the forming of a diffusing adhesive layer after drying, a parting sheet (K-14, manufactured by Teijin) was bonded onto the diffusing adhesive layer to obtain a diffusing adhesive sheet. The filler used was silicon epoxy beads (refractive index 1.43, average particle diameter 1.0 µm) with an inclusive volume of 3%. The HAZE value of the light-diffusing adhesive agent thus obtained was 25. It should be noted that the refractive index of this light diffusing adhesive agents can be adjusted to the desired refractive index by adding in the appropriate quantity of microparticles of TiO₂ or ZrO₂ butanol or MEK dispersal agent. For example, where wishing to bring the refractive index of the light-diffusing adhesive agent to 1.6, it is sufficient to adjust the proportions so that TiO₂ or ZrO₂ are present in 35 units per weight in solid measure, with the base resin (including filler) at 65 parts per weight. This light-diffusing adhesive agent was made to adhere to said light-diffusing film, and bonded to light guide 12 by pressure adhesion using a roller to obtain the surface light source device. When this surface light source device was used to light a liquid crystal panel as a back light, there was no unevenness in brightness even when seen from an angle, and the degree of brightness seen from the front was high, resulting in a bright image display device.

In the above embodiment, a light-diffusing adhesive agent with a HAZE value of 15 was obtained using a 2% inclusive volume of silicon resin beads, and used to form a surface light source device in the same way as above, and when this surface light source device was used to illuminate a liquid crystal panel, a bright image display device with no unevenness in brightness was obtained in the same way as for the surface light source device of Embodiment 5.

### Embodiment 6

In this embodiment, the surface light source device has the structure shown in Fig. 15. In other words the surface light source device comprised a light-emitting unit not shown in the diagram, light guide 12, reflector 13, directional light-diffusing film 14, and light-diffusing adhesive layer 16, the light-emitting unit being a so-called point light source comprising a light-emitting diode (LED or the like) provided in a position facing the centre of the surface of the light guide to which light was incident. Moreover, the lower surface 12b of light guide 12 had formed on it a plurality of prism patterns P in concentric circles centred on the LED. The surface light source device of Embodiment 6 was manufactured using a light-diffusing adhesive agent identical to that of Embodiment 5, and with a light-diffusing film 14 identical to that of Embodiment 5 bonded to light guide 12. When this surface light source device was used to light a liquid crystal panel as a back light, there was no unevenness in brightness even when seen from an angle, and the degree of brightness seen from the front was high, resulting in a bright image display device. It should be noted that the upper part of directional diffusion film 14 was additionally provided with prism sheet 15.

### Embodiment 7

The surface light source device of Embodiment 7 will now be described with reference to Fig. 15 and Fig. 16. Fig. 16 is a schematic plan view of the surface light source device of Embodiment 7, and shows a partly exploded plan view of the directional light-diffusing film where it is assumed that there is no prism sheet in the central circle. Fig. 17 corresponds to a cross-section through line B-B in Fig. 16. The surface light source device of Embodiment 7 comprised point light source 11 which comprises a LED light-emitting unit, light guide 12, reflector 13, directional light-diffusing film 14, and prism sheet 15. In this embodiment, the point light source was a single lamp, and as shown in Fig. 16 was positioned so as to fit into the end surface to which light is incident at angled portion 12c of the light guide. Light guide 12 was formed of polycarbonate resin or polymetacrylic resin, and a plurality of diffusion patterns 12d were formed on the rear surface (lower surface) of the light guide 12. Diffusion patterns 12d were disposed concentrically centred on the light-emitting unit, as shown in Fig. 5. The diffusion patterns were formed as depressions with a cross-section that is triangular or roughly semi-circular in shape. It should be noted that even if a prism sheet with prism patterns is positioned on the upper part of the reflector disposed on the upper side of light guide, the same characteristics will be expressed. In place of the reflector, a light-reflecting surface may be formed with a thin metal film on the rear surface 12d of the light guide where said uneven patterns are formed. At this time the light reflected at the light-reflecting surface comprising the thin metal film can be reflected back to the light guide, allowing the light to be reliably reflected by using total reflection. Thus the efficiency with which the light is used can be improved as there is no leakage of light from the rear surface of the optical sheet.

At the same time in this embodiment, directional light-diffusing film 14 is positioned on said light guide as shown in Fig. 16 with the direction of dispersion of the directional light diffusing film facing the angle opposite the light-emitting unit, so that the angle of the axes of columnar structures 22 in the directional light diffusing film lies along the line B-B, in other words so that the direction of diffusion of the directional light-diffusing film is in the same direction as that of the unevenness in brightness. Note that the directional light-diffusing film may be positioned on top of the prism sheet. When the surface light source device of Embodiment 7 was used to illuminate a liquid crystal panel as a back light, there was no unevenness in brightness even when seen from an angle, and the degree of brightness seen from the front was high, resulting in a bright image display device.

### Effect of the Invention

As has been described above, according to the surface light source device of the invention, since the directional light-diffusing film or the optical film comprising said directional light-diffusing film and a light-diffusing adhesive layer which selectively diffuses the unevenness in brightness of light output diagonally to the rear surface of the light guide is positioned facing the rear surface of the light guide, it is possible to provide a surface light source device which eliminates unevenness in the brightness of the light leaking diagonally from the surface of the light guide, and which has uniform brightness and a high degree of brightness seen from the front, and also an image display device with this built in.

Furthermore with the surface light source device of the invention, where the surface light source device is placed behind the image display panel, since the optical sheet which is the directional light-diffusing film, light prism sheet or the like is positioned far away from the image display panel, even where faults are present in the optical sheet not only are the faults difficult to see, Moire fringes are unlikely to be generated between the image display panel and the optical sheet due to the fact that the columnar structures of the directional light-diffusing film are positioned randomly, or due to changes in the diameter of the columnar structures.

## Claims

1. In a surface light source device having a light-emitting unit comprising a point light source and a light guide, a reflecting surface being provided on the reverse side of the light guide and also having a prism pattern, a surface light source **characterised in that** a directional light-diffusing film which diffuses and allows light to pass, comprising two phases with differing refractive indices, and which in addition to the phase with the greater refractive index including a plurality of regions with a columnar structure extending in the direction of the thickness of the film, has said columnar structure inclined at an angle of more than 5º and less than 60º to the normal direction of the film, is provided beside the light-outputting surface of the light guide in such a way that the direction of diffusion of the directional light-diffusing film is in the same direction as the direction of the unevenness in brightness.

2. The surface light source device claimed in Claim (1), **characterised in that** said directional light-diffusing film is bonded to said light guide or prism sheet with prism pattern using a light-diffusing adhesion agent containing microparticles with a diameter of 0.1 - 50 µm.

3. The surface light source device claimed in Claim (2), **characterised in that** said light-diffusing adhesion agent contains minute particles with diameters in the range of 1-100 nm whose refractive index is 1.8 or greater.

4. The surface optical source device claimed in Claims (2) and (3), **characterized in that** the refractive index of said light-diffusing adhesion agent is 1.55 or greater.

5. The surface optical source device claimed in any of Claims (1) - (4), **characterized in that** said columnar structure has a structure such that the refractive index varies gradually along the axis line of said columnar structure.

6. The surface light source device claimed in any of Claims (1) - (5), **characterized in that** said light-emitting unit is positioned facing the centre of the end surface of the light guide, the direction of diffusion of said directional light-diffusing film being parallel to the other end.

7. The surface light source device claimed in any of Claims (1) - (6), **characterized in that** said light-emitting unit is positioned facing the angled end surface of the light guide, the direction of diffusion of said directional light-diffusing film being directed towards the angle facing the light-emitting unit.
